# EUROPÄISCHE PATENTSCHRIFT

(11) **EP 1 658 179 B1**
(45) Veröffentlichungstag und Bekanntmachung des Hinweises auf die Patenterteilung: **17.01.2007**
(21) Anmeldenummer: 04763934.9
(22) Anmeldetag: 09.08.2004
(51) Int. Cl.: B42D 15/00

(54) **SICHERHEITSELEMENT MIT DÜNNSCHICHTELEMENT**
SECURITY ELEMENT WITH A THIN LAYERED ELEMENT
ELEMENT DE SECURITE A ELEMENT A COUCHE MINCE

(30) Priorität: 12.08.2003 DE 10337331
(43) Veröffentlichungstag der Anmeldung: 24.05.2006
(73) Patentinhaber: Giesecke & Devrient GmbH, 81677 München (DE)
(72) Erfinder: HEIM, Manfred, 81379 München (DE); LIEBLER, Ralf, 83703 Gmund (DE); KROMBHOLZ, Markus, 83607 Holzkirchen (DE)
(74) Vertreter: Klunker, Hans-Friedrich
(86) Internationale Anmeldenummer: PCT/EP2004/008912
(87) Internationale Veröffentlichungsnummer: WO 2005/015271

(56) Entgegenhaltungen:
- WO-A1-00/34395
- WO-A1-01/03945
- DE-A1- 4 343 387
- US-B1- 6 243 204

## Beschreibung

Die Erfindung betrifft ein Sicherheitselement für Sicherheitspapiere, Wertdokumente und dergleichen mit einem Dünnschichtelement mit Farbkippeffekt, das eine Reflexionsschicht, eine Absorberschicht und eine zwischen Reflexionsschicht und Absorberschicht angeordnete Abstandsschicht aufweist. Die Erfindung betrifft auch ein Sicherheitspapier, ein Wertdokument, ein Verfahren zum Herstellen eines solchen Sicherheitselements sowie eine Druckfarbe mit optisch variablen Farbpigmenten und ein Herstellungsverfahren für eine solche Druckfarbe.

Wertdokumente, wie beispielsweise Banknoten, Aktien, Anleihen, Urkunden, Gutscheine, Schecks, hochwertige Eintrittskarten, aber auch andere fälschungsgefährdete Papiere, wie Pässe oder sonstige Ausweisdokumente, werden in der Regel mit verschiedenen Sicherheitsmerkmalen zur Erhöhung der Fälschungssicherheit versehen. Das Sicherheitsmerkmal kann beispielsweise in Form eines in eine Banknote eingebetteten Sicherheitsfadens, eines aufgebrachten Sicherheitsstreifens oder eines selbsttragenden Transferelements, wie einem Patch oder einem Etikett, das nach seiner Herstellung auf ein Wertdokument aufgebracht wird, ausgebildet sein.

Es ist bekannt, Sicherheitsmerkmale mit mehrschichtigen Dünnschichtelementen zu verwenden, deren Farbeindruck für den Betrachter sich mit dem Betrachtungswinkel ändert, beispielsweise von Grün nach Blau, von Blau nach Magenta oder von Magenta nach Grün. Der Farbeffekt beruht auf Interferenzeffekten aufgrund von Mehrfachreflexionen in den verschiedenen Teilschichten des Dünnschichtelements und ist beispielsweise in der Druckschrift EP 0 395 410 B1 im Detail beschrieben. Derartige Farbänderungen beim Verkippen eines Sicherheitsmerkmals werden im Folgenden als Farbkippeffekt oder Color-Shift-Effekt bezeichnet.

Als für den Farbeffekt hauptsächlich verantwortliche Schicht enthalten die Dünnschichtelemente eine ultradünne (meist etwa 100 bis 500 nm dicke) Dielektrikumsschicht, die typischerweise zwischen einer Absorberschicht und einer Reflexionsschicht angeordnet ist. Die dünnen Dielektrikumsschichten werden durch ein aufwändiges Vakuumaufdampfverfahren hergestellt. Insbesondere bei den im Bereich von Sicherheitspapieren und Banknoten erforderlichen Großflächenbeschichtungen sind die Anforderungen an die Präzision dabei extrem hoch, so dass derartige Beschichtungen weltweit nur an wenigen Orten ausgeführt werden können.

Davon ausgehend liegt der Erfindung die Aufgabe zugrunde, ein gattungsgemäßes Sicherheitselement anzugeben, das gegenüber dem Stand der Technik einfacher und kostengünstiger herzustellen ist.

Diese Aufgabe wird durch das Sicherheitselement mit den Merkmalen des Hauptanspruchs gelöst. Ein Sicherheitspapier für die Herstellung von Sicherheitsdokumenten, ein Wertdokument mit einem solchen Sicherheitselement sowie ein Herstellungsverfahren für ein solches Sicherheitselement sind Gegenstand der nebengeordneten Ansprüche. Die Erfindung enthält in einem weiteren Aspekt eine Druckfarbe mit optisch variablen Farbpigmenten und ein Herstellungsverfahren für eine solche Druckfarbe. Weiterbildungen der Erfindung sind Gegenstand der Unteransprüche.

Das erfindungsgemäße Sicherheitselement baut auf dem Stand der Technik dadurch auf, dass die Abstandsschicht durch eine Druckschicht mit Dispersionspartikeln mit monomodaler oder oligomodaler Größenverteilung gebildet ist. Da in der Druckschicht nur Dispersionspartikel mit einer bestimmten Größe (monomodale Verteilung) oder mit wenigen, voneinander abgegrenzten Größen (oligomodale Verteilung) vorliegen, kann eine sehr hohe Schichtdickenkonstanz der Abstandsschicht erzielt werden, wie nachfolgend genauer erläutert wird.

Gemäß einer bevorzugten Ausgestaltung der Erfindung enthält die Druckschicht eine Hauptspezies von im Wesentlichen kugelförmigen, monodispersen Dispersionspartikeln, deren Durchmesser die Dicke der Abstandsschicht bestimmt. Dabei werden Partikel im Rahmen der vorliegenden Erfindung als monodispers bezeichnet, wenn sie sehr eng teilchengrößenverteilt sind, bevorzugt wenn für die Verteilung der Teilchengrößen σₘ/dₘ < 20%, besonders bevorzugt < 5% gilt, wobei dₘ den Mittelwert und σₘ die Standardabweichung der Größenverteilung darstellt. Anschaulich gesprochen haben die monodispersen Dispersionspartikel der Druckfarbe alle im Wesentlichen den gleichen Durchmesser dₘ. Monodisperse Partikel haben auch eine monomodale Größenverteilung, da der mittlere Durchmesser dₘ den einzigen Modus der Größenverteilung darstellt.

Die Dispersionspartikel der Hauptspezies weisen bevorzugt einen Durchmesser dₘ auf, der zwischen etwa 100 nm und etwa 1500 nm, bevorzugt zwischen etwa 200 nm und etwa 1000 nm, besonders bevorzugt zwischen etwa 200 nm und 500 nm liegt. Um einen gewünschten Farbeffekt zu erhalten, werden unter Berücksichtigung des Brechungsindex n des Materials Dispersionspartikel mit einem Durchmesser dₘ gewählt, so dass die erforderliche optische Dicke n*dₘ der Abstandsschicht erreicht wird. Mit dem angegebenen Durchmesserbereich der Dispersionspartikel lässt sich praktisch jeder gewünschte Farbkippeffekt mittels der gedruckten Abstandsschicht verwirklichen.

Zweckmäßig umfasst die Druckschicht einen Monolayer oder Submonolayer der Dispersionspartikel der Hauptspezies. Wegen der gleichmäßigen Größe der Dispersionspartikel weist auch der Monolayer oder Submonolayer eine sehr gleichmäßige Dicke auf. Durch diese Maßnahme lässt sich auch in einem größeren Flächenbereich, insbesondere über die Bahnbreite einer Rolle, eine gleichmäßig Schichtdicke der Druckschicht gewährleisten.

Nach einer vorteilhaften Ausgestaltung der Erfindung sind die Dispersionspartikel so ausgebildet, dass sie in einem dem Druckvorgang nachfolgenden Prozess aufschmelzen. Dazu weisen die Dispersionspartikel der Hauptspezies vorzugsweise eine Schmelztemperatur im Bereich von 50°C bis 250°C auf, besonders bevorzugt im Bereich von 80°C bis 120°C.

Durch das Aufschmelzen kann eine eventuell unebene Oberfläche der Druckschicht eingeebnet werden. Gleichzeitig wird die Haftung der Dispersionspartikel untereinander und die Haftung der Partikel zur darunter liegenden Schicht verbessert. Die Farbreinheit des Dünnschichtelements kann durch das Einebnen der Druckschicht deutlich verbessert werden.

Die Dispersionspartikel der Hauptspezies können beispielsweise aus Polystyrol, Styrol-Acryl-Nitril-Copolymerisate (SAN), aromatische Polyester oder Polyamide gebildet sein.

Gemäß einer anderen vorteilhaften Ausgestaltung der Erfindung weisen die Dispersionspartikel der Hauptspezies einen Kern-Schale-Aufbau mit einem unschmelzbaren oder hochschmelzenden Kern und einer leicht filmbildenden Schale auf. Bei einem solchen Aufbau bleibt der Kern der Dispersionspartikel während eines Temperaturschritts stabil, während die Schalen der Dispersionspartikel schmelzen und einen idealerweise durchgehenden Film ausbilden. Durch diesen Film wird eine sehr gute Einebnung der Druckschicht erreicht. Darüber hinaus wird die Haftung der Druckschicht auf der darunter liegenden Schicht und die Haftung der Dispersionspartikel untereinander stark erhöht.

In vorteilhaften Ausgestaltungen ist der Kern der Dispersionspartikel aus einem Hartpolymer wie Polystyrol, PMMA, Styrol-Acryl-Nitril-Copolymerisate (SAN), aromatische Polyester oder Polyamide und die Schale aus PMMA, Polybutadien oder Polyisopren gebildet.

Nach einer weiteren bevorzugten Ausgestaltung enthält die Druckschicht neben den Dispersionspartikeln der Hauptspezies auch Dispersionspartikel mit geringerer Größe, die in Zwischenräumen der im Wesentlichen kugelförmigen Dispersionspartikel der Hauptspezies angeordnet sind. In diesem Fall ist die Größenverteilung der Dispersionspartikel oligomodal, da neben der Hauptspezies mit einem Durchmesser dₘ mindestens eine weitere Spezies mit einem Durchmesser d_{zw} < dₘ vorhanden ist. Ist die Größe der weiteren Spezies deutlich kleiner als der Durchmesser der Hauptspezies, so führen die Dispersionspartikel der zusätzlichen Spezies zu einer Glättung und Einebnung der Druckschicht. Der Durchmesser der kleineren Spezies ist bevorzugt kleiner als 0,5*dₘ, besonders bevorzugt kleiner als 0,25*dₘ. Es versteht sich, dass die Größenverteilung der kleineren Dispersionspartikel nicht ebenso eng sein muss, wie die der Hauptspezies, da sie nicht die Dicke der Abstandsschicht bestimmen.

In einer zweckmäßigen Gestaltung weisen die Dispersionspartikel geringerer Größe eine so niedrige Schmelztemperatur auf, dass sie beim Trocknen der Druckschicht aufschmelzen und verfilmen. Dadurch wird, wie oben beschrieben, neben einer Einebnung der Druckschicht eine verbesserte Haftung der Dispersionspartikel untereinander sowie zur darunter liegenden Schicht erreicht.

Optional können zusätzlich Verlaufs- und/oder Verfilmungsadditive, wie beispielsweise PVA oder Polysorbat 20, eingesetzt werden, um die Filmbildung und die Einebnung der Oberfläche zu optimieren.

Die Reflexionsschicht ist in vorteilhaften Ausgestaltungen durch eine opake Reflektorschicht, insbesondere aus einem Metall, wie Aluminium, Silber, Nickel, Kupfer, Eisen, Chrom oder Gold, gebildet.

Das Sicherheitselement kann auch als semitransparentes Color-Shift-Sicherheitselement ausgebildet sein. In diesem Fall wird als Reflexionsschicht anstelle einer opaken Reflexionsschicht eine Absorberschicht, eine semitransparente Metallschicht oder eine transparente Reflexionsschicht, deren Brechungsindex von dem der Druckschicht verschieden ist, eingesetzt. Als transparente Reflexionsschicht kommen grundsätzlich fast alle aufdampfbaren, durchsichtigen Verbindungen infrage, insbesondere also auch höher brechende Beschichtungsmaterialien, wie ZrO₂, ZnS, TiO₂ und Indiumzinnoxide (ITO). Die Schichtdicke der transparenten Reflexionsschicht liegt vorzugsweise im Bereich von 30 nm bis 300 nm, besonders bevorzugt 50 nm bis 60 nm.

Als Absorberschichten dienen typischerweise Metallschichten aus Materialien, wie Chrom, Eisen, Gold, Kupfer, Aluminium oder Titan, in einer Dicke von vorzugsweise 4 nm bis 20 nm. Als Absorberschichtmaterialien können auch Verbindungen, wie Nickel-Chrom-Eisen, oder seltenere Metalle, wie Vanadium, Palladium oder Molybdän, verwendet werden. Weitere geeignete Materialien sind z.B. Nickel, Cobalt, Wolfram, Niobium, Aluminium, Metallverbindungen, wie Metallfluoride, -oxide, -sulfide, -nitride, -carbide, - phosphide, -selenide, -silicide und Verbindungen davon, aber auch Kohlenstoff, Germanium, Cermet, Eisenoxid und dergleichen.

Die Absorber- und die Reflexionsschicht werden vorzugsweise im Vakuumbedampfungsverfahren aufgedampft.

Unterschiedlichste Bedampfungsverfahren sind zur Erzeugung der Schichten geeignet. Eine methodische Gruppe bildet Physical Vapor Deposition (PVD) mit Schiffchenbedampfung, Bedampfung durch Widerstandsheizung, Bedampfung durch Induktionsheizung oder auch Elektronenstrahlbedampfung, Sputtern (DC oder AC) und Lichtbogenbedampfung. Andererseits kann die Bedampfung auch als Chemical Vapor Deposition (CVD) erfolgen, wie z.B. Sputtern im reaktiven Plasma oder jede andere plasmaunterstützte Bedampfungsart. Es besteht grundsätzlich auch die Möglichkeit, Dielektrikumsschichten aufzudrucken.

Stehen Dispersionspartikel mit unterschiedlichem Brechungsindex zur Verfügung, kann das Color-Shift-Sicherheitselement auch so gestaltet werden, dass die Druckschicht zwei oder mehrere Teilschichten umfasst, die jeweils im Wesentlichen kugelförmige, monodisperse Dispersionspartikel mit voneinander verschiedenem Brechungsindex enthalten. Die Teilschichten können dabei durch eine semitransparente Metallschicht getrennt sein oder sie werden alternativ unter Verzicht auf dazwischen liegende semitransparente Metallschichten unmittelbar übereinander angeordnet. In diesem Fall ergibt sich ein nahezu volltransparentes Sicherheitselement mit unterschiedlichem Farbeindruck unter unterschiedlichen Betrachtungswinkeln. Seine optische Wirkung entfaltet ein derartiges Sicherheitselement am besten vor einem dunklen Hintergrund.

Wird zwischen den einzelnen Teilschichten eine semitransparente Metallschicht aufgebracht, so erhält man bei geeignet gewählter Transmission der semitransparenten Schichten ein Sicherheitselement, das einen deutlich wahrnehmbaren Farbkippeffekt auch ohne einen absorbierenden Hintergrund zeigt.

Gemäß einer vorteilhaften Weiterbildung der Erfindung weist das Dünnschichtelement auf der von der Abstandsschicht abgewandten Seite der Reflexionsschicht eine zweite Absorberschicht und eine zwischen der zweiten Absorberschicht und der Reflexionsschicht angeordnete zweite Abstandsschicht auf, so dass ein Dünnschichtelement mit von beiden Seiten sichtbaren Farbkippeffekten entsteht. Die zweite Abstandsschicht ist dabei durch eine zweite Druckschicht mit Dispersionspartikeln mit monomodaler oder oligomodaler Größenverteilung gebildet. Bevorzugt enthält die zweite Druckschicht eine Hauptspezies von im Wesentlichen kugelförmigen, monodispersen Dispersionspartikeln, wie sie oben in Zusammenhang mit der ersten Druckschicht beschrieben sind. Derartige symmetrisch ausgebildete Sicherheitselemente können bei Sicherheitspapieren oder Wertdokumenten zum Einsatz kommen, die einen Fensterbereich oder ein Loch aufweisen. Das Sicherheitselement wird über dem Fensterbereich oder Loch angebracht, so dass es von beiden Seiten her sichtbar ist.

Mit Vorteil enthalten die erste und zweite Druckschicht jeweils eine Hauptspezies mit unterschiedlichem Durchmesser und/ oder unterschiedlichem Brechungsindex, so dass bei dem Sicherheitselement auf beiden Seiten jeweils ein unterschiedlicher Farbkippeffekt erkennbar ist.

In den Zwischenräumen der Dispersionspartikel ist zweckmäßig eine Matrixfüllung aus Polymermaterial angeordnet, die die Druckschicht einebnet und eine gute Haftung der Dispersionspartikel untereinander und zur darunter liegenden Schicht herstellt. Eine solche Matrixfüllung kann in einem Temperaturschritt beispielsweise durch eine Verfilmung der Schalen von Kern-Schale-Dispersionspartikeln oder durch eine Verfilmung einer zusätzlichen Spezies von Dispersionspartikeln gebildet werden.

In einer vorteilhaften Weiterbildung der Erfindung ist das Dünnschichtelement mit einer flächigen Beugungsstruktur versehen, um ein Color-Shift-Hologramm zu bilden. In einer Variante sind dabei die Absorberschicht, die Abstandsschicht und die Reflektorschicht in dieser Reihenfolge auf einem Träger mit der flächigen Beugungsstruktur angeordnet. In einer anderen Variante ist die Reihenfolge der Schichten umgekehrt, so dass die Reflektorschicht, die Abstandsschicht und die Absorberschicht in dieser Reihenfolge auf dem Träger angeordnet sind.

Der Träger kann beispielsweise durch eine mit einer Beugungsstruktur versehene Prägelackschicht auf einer Kunststofffolie gebildet sein, welche einen Bestandteil des fertigen Sicherheitselements bildet. Die Beugungsstruktur der Prägelackschicht setzt sich dabei beim Aufbringen der weiteren Schichten in diesen vertikal nach oben fort. Die Schichten können auch auf einem Zwischenträger erzeugt werden, der bei Fertigstellung des Sicherheitselements oder spätestens beim Aufbringen oder Einbringen des Sicherheitselements in einen Gegenstand entfernt wird. Die Absorberschicht eines derartigen Color-Shift-Hologramms weist typischerweise eine Transmission zwischen 25% und 75% auf. Vorzugsweise ist der Dünnschichtaufbau der erfindungsgemäßen Sicherheitselemente auf ein Substrat aufgebracht. Bei dem Substrat handelt es sich vorzugsweise um eine transparente Kunststofffolie, wie z.B. Polyester.

Die oben beschriebenen Sicherheitselemente können beispielsweise in Form eines Sicherheitsstreifens, eines Sicherheitsfadens, eines Sicherheitsbandes, eines etikettenförmigen Einzelelements (Patch) oder eines Transferelements zum Aufbringen auf ein Sicherheitspapier, Wertdokument oder dergleichen ausgebildet sein.

Die Erfindung umfasst auch ein Sicherheitspapier für die Herstellung von Sicherheitsdokumenten, wie Banknoten, Ausweiskarten oder dergleichen, das mit einem oben beschriebenen Sicherheitselement ausgestattet ist. Das Sicherheitspapier kann insbesondere wenigstens einen durchgehenden Fensterbereich oder ein Loch enthalten, das mit dem Sicherheitselement bedeckt ist. In diesem Fall kommt mit Vorteil ein symmetrisches Sicherheitselement zum Einsatz, dessen Farbkippeffekte von beiden Seiten sichtbar sind.

Die Erfindung enthält ferner ein mit einem oben beschriebenen Sicherheitselement ausgestattetes Wertdokument, beispielsweise eine Banknote. Das Wertdokument kann ebenfalls einen mit dem Sicherheitselement bedeckten Fensterbereich oder ein damit abgedecktes Loch enthalten.

Das beschriebene Sicherheitselement, Sicherheitspapier oder Wertdokument kann unter anderem zur Sicherung von Waren beliebiger Art eingesetzt werden.

Zur Herstellung eines Sicherheitselements für Sicherheitspapiere, Wertdokumente und dergleichen, das ein Dünnschichtelement mit Farbkippeffekt enthält, welches eine Reflexionsschicht, eine Absorberschicht und eine zwischen Reflexionsschicht und Absorberschicht angeordnete Abstandsschicht aufweist, ist erfindungsgemäß vorgesehen, dass die Abstandsschicht in einem Druckverfahren mit einer Druckfarbe mit Dispersionspartikeln mit monomodaler oder oligomodaler Größenverteilung aufgebracht wird.

Die Abstandsschicht wird insbesondere mittels Tiefdruck, Flexodruck oder Offsetdruck aufgebracht. Bevorzugt wird dabei eine Druckfarbe verwendet, die eine Hauptspezies von im Wesentlichen kugelförmigen, monodispersen Dispersionspartikeln enthält. Der Feststoffanteil der Farbe und die Übertragungsmenge werden beim Druckvorgang zweckmäßig so eingestellt, dass sich auf der Reflexionsschicht überwiegend ein Monolayer oder Submonolayer mit den Dispersionspartikeln bildet.

Die aufgedruckte Abstandsschicht wird mit Vorteil einem Temperaturschritt unterworfen, in dem zumindest ein Bestandteil der Druckfarbe aufschmilzt. Der aufschmelzende Bestandteil kann beispielsweise durch die Dispersionspartikel selbst, die Schale der Dispersionspartikel oder eine zusätzliche Dispersionspartikel-Spezies gebildet sein. Der aufgeschmolzene Bestandteil verfilmt und ebnet dadurch zum einen die aufgedruckte Schicht ein und verbessert zum anderen die Haftung der Dispersionspartikel untereinander und zum Untergrund.

Weist das Dünnschichtelement auf der von der Abstandsschicht abgewandten Seite der Reflexionsschicht eine zweite Abstandsschicht und eine zweite Absorberschicht auf, so wird erfindungsgemäß die zweite Abstandsschicht ebenfalls in einem Druckverfahren mit einer Druckfarbe mit Dispersionspartikeln mit monomodaler oder oligomodaler Größenverteilung aufgebracht. Es ergibt sich ein symmetrisches Dünnschichtelement mit von beiden Seiten sichtbaren Farbkippeffekten. Für die zweite Abstandsschicht wird dabei wie für die erste Abstandsschicht bevorzugt eine Druckfarbe verwendet, die eine Hauptspezies von im Wesentlichen kugelförmigen, monodispersen Dispersionspartikeln enthält.

Nach einer bevorzugten Weiterentwicklung werden für die erste und zweite Abstandsschicht Druckfarben verwendet, die jeweils eine Hauptspezies mit unterschiedlichem Durchmesser und/oder unterschiedlichem Brechungsindex enthalten, so dass bei dem Dünnschichtelement von den beiden Seiten unterschiedliche Farbkippeffekte erkennbar sind.

Das Aufdrucken der Abstandsschicht oder, im Fall eines symmetrischen Dünnschichtelements, beider Abstandsschichten erfolgt mit besonderem Vorteil von Rolle mit einer über die Bahnbreite gleichmäßigen Schichtdicke.

In einem weiteren Aspekt enthält die Erfindung eine Druckfarbe mit optisch variablen Farbpigmenten, die durch Interferenzschicht-Partikel gebildet sind.

Der Schichtaufbau der Interferenzschicht-Partikel umfasst eine Reflexionsschicht, eine Absorberschicht und eine zwischen Reflexionsschicht und Absorberschicht angeordnete Abstandsschicht, wobei die Abstandsschicht durch eine Druckschicht mit Dispersionspartikeln mit monomodaler oder oligomodaler Größenverteilung gebildet ist. Bezüglich der vorteilhaften Durchmesser, des Aufbaus, der Materialwahl, der Anordnung und sonstiger Eigenschaften der Dispersionspartikel wird auf obige Ausführungen im Zusammenhang mit dem Sicherheitselement verwiesen, die für die Dispersionspartikel der Druckfarbe ebenfalls gelten.

Bei einem Verfahren zur Herstellung einer Druckfarbe mit optisch variablen Farbpigmenten wird auf ein Substrat ein Dünnschichtelement mit Farbkippeffekt aufgebracht, indem auf das Substrat eine Reflexionsschicht, eine Absorberschicht und eine Abstandsschicht aufgebracht werden, wobei die Abstandsschicht in einem Druckverfahren mit Dispersionspartikeln mit monomodaler oder oligomodaler Größenverteilung aufgebracht wird, das Dünnschichtelement von dem Substrat abgelöst wird, das abgelöste Dünnschichtelement auf eine gegebene Partikelgröße gemahlen und die Partikel als optisch variable Farbpigmente in ein Bindemittel eingebracht werden.

Bei derartigen Druckfarben ist es von Vorteil, wenn unter der Reflexionsschicht ein dunkler Untergrund vorliegt, bevorzugt schwarze Farbe verdruckt ist. Interferenzpigmente, die beim Verdrucken der Druckfarbe nicht mit dem gewünschten Interferenzschichtaufbau, sondern mit dem schwarzen Untergrund nach oben zu liegen kommen, stören den Farbeindruck weit weniger als Pigmente, die mit der Reflexionsschicht nach oben zu liegen kommen. Letztere reflektieren weißes Licht relativ stark, was den gewünschten Farbeindruck durch den Interferenzschichtaufbau stört.

In einer bevorzugten Ausführungsform umfasst der Schichtaufbau der Interferenzschicht-Partikel eine erste Absorberschicht, eine erste Abstandsschicht, eine Reflexionsschicht, eine zweite Abstandsschicht und eine zweite Absorberschicht, wobei die erste Abstandsschicht zwischen der Reflexionsschicht und der ersten Absorberschicht angeordnet ist, und die zweite Abstandsschicht zwischen der Reflexionsschicht und der zweiten Absorberschicht angeordnet ist. Die erste und zweite Abstandsschicht sind dabei durch eine erste beziehungsweise zweite Druckschicht mit Dispersionspartikeln mit monomodaler oder oligomodaler Größenverteilung gebildet.

Die erste und zweite Abstandsschicht der Interferenzschicht-Partikel enthalten bevorzugt jeweils eine Hauptspezies von im Wesentlichen kugelförmigen, monodispersen Dispersionspartikeln, deren Durchmesser die Dicke der ersten bzw. zweiten Abstandsschicht bestimmen. Bezüglich der vorteilhaften Durchmesser, des Aufbaus, der Materialwahl, der Anordnung und sonstiger Eigenschaften der Dispersionspartikel wird auf die obigen Ausführungen in Zusammenhang mit dem Sicherheitselement verwiesen, die für die Dispersionspartikel der Druckfarbe ebenfalls gelten.

Bei einem Verfahren zur Herstellung einer Druckfarbe mit optisch variablen Farbpigmenten
a) wird auf ein Substrat ein Dünnschichtelement mit Farbkippeffekt aufgebracht, indem auf das Substrat in dieser Reihenfolge eine erste Absorberschicht, eine erste Abstandsschicht, eine Reflexionsschicht, eine zweite Abstandsschicht und eine zweite Absorberschicht aufgebracht werden,
   wobei die erste und zweite Abstandsschicht jeweils in einem Druckverfahren mit einer Druckfarbe mit Dispersionspartikeln mit monomodaler oder oligomodaler Größenverteilung aufgebracht werden,
b) wird das Dünnschichtelement von dem Substrat abgelöst,
c) wird das abgelöste Dünnschichtelement auf eine gegebene Partikelgröße gemahlen, und
d) werden die Partikel als optisch variable Farbpigmente in ein Bindemittel eingebracht.

Für die Einzelheiten der Aufbringung der Abstandsschichten wird wieder auf die obigen Ausführungen in Zusammenhang mit dem Sicherheitselement verwiesen. Die dort erwähnten vorteilhaften Ausgestaltungen gelten für die Herstellung der Druckfarbe ebenfalls.

Für alle erfindungsgemäßen Ausführungsbeispiele gilt auch, dass die Abstandsschicht partiell aus unterschiedlichen Dispersionspartikeln aufgebaut ist. D.h., es ist möglich, an verschiedenen Stellen unterschiedliche Farbkippeffekte zu erzielen. So können beispielsweise zwei oder mehrere Bereiche mit Dispersionspartikeln unterschiedlicher Kugelgröße nebeneinander gedruckt werden. Es ist auch denkbar, eine vollflächige Abstandsschicht mit Dispersionspartikeln einer bestimmten Größe mit einer weiteren Abstandsschicht mit Dispersionspartikeln einer anderen Größe motivabhängig zu überdrucken. In den so ausgestatteten Sicherheitselementen kann der Betrachter an unterschiedlichen Stellen unterschiedliche Farbkippeffekte wahrnehmen.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

### Es zeigen:

- Fig. 1: eine schematische Darstellung einer Banknote mit einem aufgeklebten Color-Shift-Transferelement nach einem Ausführungsbeispiel der Erfindung,
- Fig. 2: das Color-Shift-Element von Fig. 1 im Querschnitt,
- Fig. 3: in (a) eine Druckfarbe mit monodispersen Dispersionspartikeln mit Kern-Schale-Aufbau, und in (b) ein Color-Shift-Element mit einer mit der Druckfarbe von Fig. 3(a) aufgedruckten Abstandsschicht nach einem anderen Ausführungsbeispiel der Erfindung,
- Fig. 4: in (a) eine Druckfarbe, die neben einer mondispersen Hauptspezies auch hochschmelzende Dispersionspartikel geringeren Durchmessers enthält, und in (b) ein Color-Shift-Element mit einer mit der Druckfarbe von Fig. 4(a) aufgedruckten Abstandsschicht nach einem weiteren Ausführungsbeispiel der Erfindung,
- Fig. 5: in (a) eine Druckfarbe, die neben einer mondispersen Hauptspezies auch leicht filmbildende Dispersionspartikel geringeren Durchmessers enthält, und in (b) ein Color-Shift-Element mit einer mit der Druckfarbe von Fig. 5(a) aufgedruckten Abstandsschicht nach noch einem weiteren Ausführungsbeispiel der Erfindung,
- Fig. 6: ein Color-Shift-Element nach einem weiteren Ausführungsbeispiel der Erfindung im Querschnitt,
- Fig. 7: einen Schnitt durch eine Banknote mit ausgestanzter Öffnung, die von einem Color-Shift-Element der in der Fig. 6 gezeigten Art abgedeckt wird,
- Fig. 8: ein Color-Shift-Hologramm nach einem weiteren Ausführungsbeispiel der Erfindung im Querschnitt, und
- Fig. 9: eine Druckfarbe mit optisch variablen Farbpigmenten nach einem Ausführungsbeispiel der Erfindung.

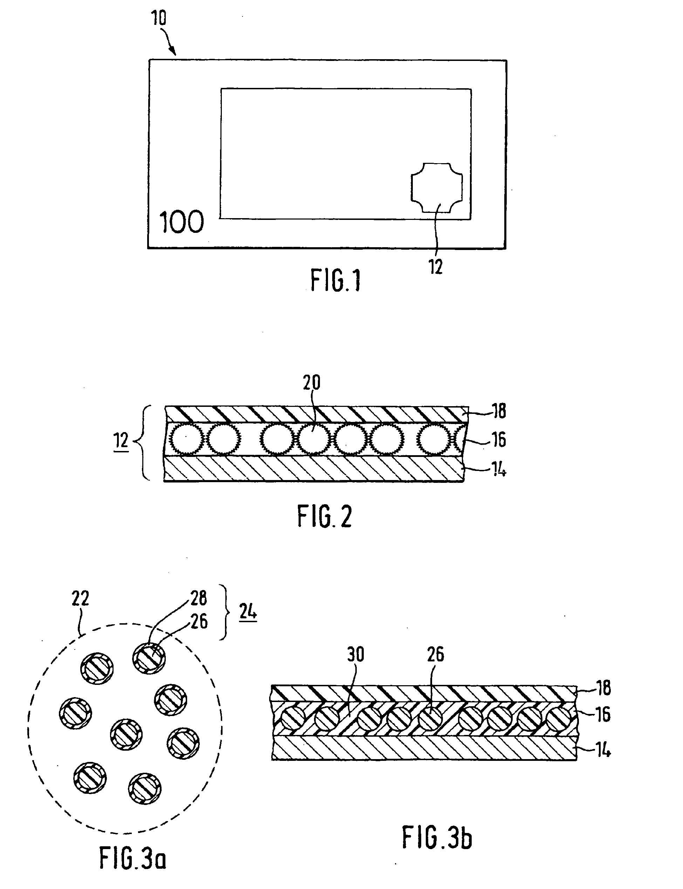

Die Erfindung wird nun am Beispiel einer Banknote erläutert. Fig. 1 zeigt eine schematische Darstellung einer Banknote 10 mit einem aufgeklebten Color-Shift-Transferelement 12. Das Color-Shift-Element 12 kann, wie weiter unten gezeigt, einen Fensterbereich oder ein Loch in der Banknote überdecken, oder es kann auf einem geschlossenen und im Wesentlichen undurchsichtigen Teil der Banknote angebracht sein. In letztem Fall, der mit Bezug auf die Fig. 1 bis 5 nunmehr näher erläutert wird, weist das Color-Shift-Element 12 nur einen von der Vorderseite her sichtbaren Farbkippeffekt auf.

Der Schichtaufbau des Color-Shift-Elements 12 nach einem ersten Ausführungsbeispiel der Erfindung ist in der Fig. 2 schematisch im Querschnitt dargestellt. Das Color-Shift-Element 12 weist eine Reflexionsschicht 14 auf, die durch eine opake Metallschicht gebildet ist, eine Absorberschicht 18 und eine zwischen diesen Schichten angeordnete Abstandsschicht 16.

Die Abstandsschicht 16 ist im Ausführungsbeispiel mit einer Druckfarbe mit monodispersen Dispersionspartikeln 20 aufgedruckt, welche einen Durchmesser von 400 nm aufweisen. Nach dem Trocknen der Druckfarbe bilden die Dispersionspartikel 20 eine gleichförmige und regelmäßige Struktur auf der Reflexionsschicht 14 aus. Der Feststoffanteil der Druckfarbe und die Übertragungsmenge wird dabei so eingestellt, dass sich im Wesentlichen ein Monolayer aus Dispersionspartikeln 20 auf der Oberfläche der Reflexionsschicht 14 einstellt.

Aufgrund des gleichmäßigen Durchmessers der monodispersen Dispersionspartikel 20 weist die Abstandsschicht 16 eine sehr gleichmäßige Schichtdicke auf, die im Wesentlichen dem Durchmesser der Dispersionspartikel 20 entspricht. Fehlstellen oder Lücken in der geordneten Struktur ergeben formal einen Submonolayer an Dispersionspartikeln 20. Diese Ordnungsfehler führen jedoch nicht zu einer Verschlechterung der Schichtdickenkonstanz, solange die Belegungsdichte der Dispersionspartikel 20 nur groß genug ist.

Es versteht sich, dass der Durchmesser der Dispersionspartikel 20 entsprechend der gewünschten Farbe des Color-Shift-Elements 12 unter Berücksichtigung des Brechungsindex des Dispersionspartikelmaterials gewählt wird.

Fig. 3 zeigt in (a) eine Druckfarbe 22, bei der monodisperse Kern-Schale-Partikel 24 in Wasser dispergiert sind. Die Kern-Schale-Partikel 24 weisen einen hochschmelzenden Kern 26 und eine leicht filmbildende Hülle 28 auf. Beispielsweise kann der Kern 26 aus Polystyrol und die Schale 24 aus Polybutylacrylat bestehen. Nach dem Aufbringen der Druckfarbe 22 auf die Reflexionsschicht 14 wird die Abstandschicht 16 in einem nachfolgenden Prozessschritt getrocknet. Dabei schmelzen die Schalen 28 der Dispersionspartikeln 24 und verfilmen zu einer Einbettungsmatrix 30, wie in Fig. 3(b) dargestellt. Dadurch wird sowohl eine Einebnung der Druckschicht 16 erreicht, als auch die Haftung der verbleibenden Kerne 26 der Dispersionspartikel untereinander und zur darunter liegenden Reflexionsschicht 14 verbessert.

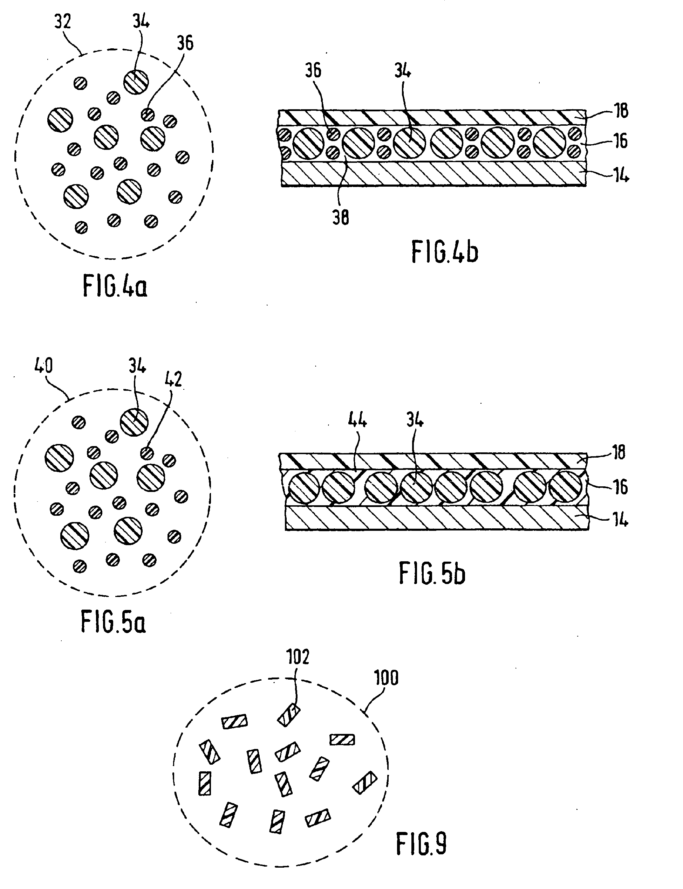

Ein weiteres Ausführungsbeispiel der Erfindung ist in Fig. 4 dargestellt. Die Druckfarbe 32 der Fig. 4(a) enthält neben einer mondispersen Hauptspezies 34 auch hochschmelzende Dispersionspartikel 36 geringeren Durchmessers. Im Ausführungsbeispiel ist die Größenverteilung der Dispersionspartikel 34 und 36 daher bimodal. Beim Aufdrucken der Druckfarbe 32 auf die Reflexionsschicht 14 füllen die kleineren Dispersionspartikel 36 die Zwischenräume 38 zwischen den größeren Partikeln 34 und ebnen damit die Druckschicht 16 ein. Es versteht sich, dass die Größenverteilung der kleineren Partikelspezies 36 nicht ebenso eng sein muss, wie die Verteilung der Hauptspezies 34, da sie für die Dicke der Abstandsschicht 16 von untergeordneter Bedeutung sind.

Fig. 5 zeigt ein weiteres Ausführungsbeispiel mit einer Druckfarbe 40, bei dem die kleineren Dispersionspartikel 42 im Unterschied zur eben beschriebenen Druckfarbe 32 leicht filmbildend sind. Nach dem Aufbringen der Druckfarbe 40 auf die Reflexionsschicht 14 werden die Dispersionspartikel 42 in einem Temperaturschritt zu einem Film 44 verschmolzen. Wie in Zusammenhang mit der Fig. 3 beschrieben, ergeben sich durch den Einbettungsfilm 44 eine Einebnung der Druckschicht 16 sowie eine verbesserte Haftung der Hauptspezies 34.

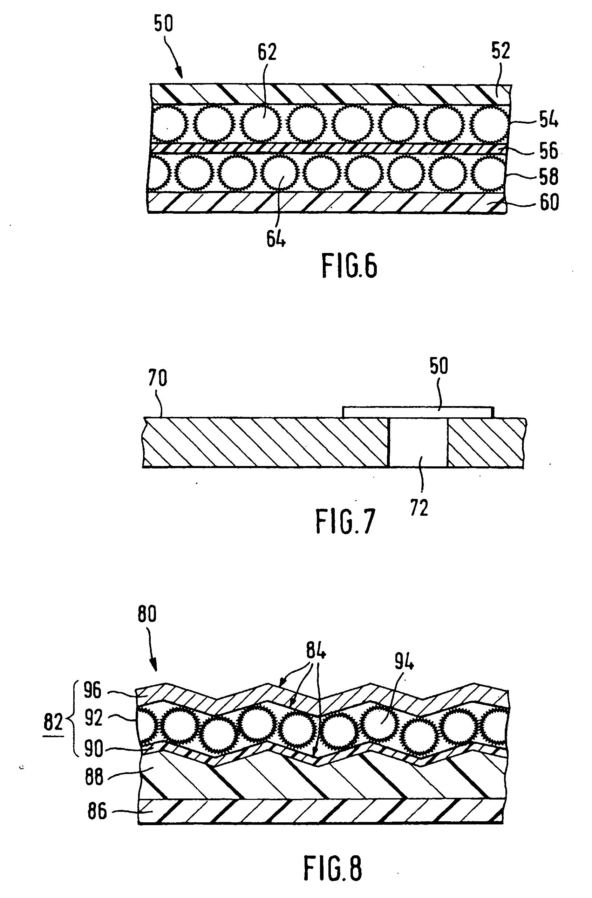

Ein Sicherheitselement mit symmetrischem Schichtaufbau, bei dem von beiden Seiten her ein Farbkippeffekt sichtbar ist, ist in Fig. 6 illustriert. Das dort gezeigte Dünnschichtelement 50 enthält eine erste Absorberschicht 52, eine erste Abstandsschicht 54, eine opake Reflektorschicht 56, eine zweite Abstandsschicht 58 und eine zweite Absorberschicht 60. Beide Abstandsschichten 54 und 58 sind, wie oben beschrieben, durch eine Druckschicht mit monomodal oder oligomodal größenverteilten Dispersionspartikeln gebildet.

Die erste Abstandsschicht 54 ist im Ausführungsbeispiel mit einer Druckfarbe mit monodispersen Dispersionspartikeln 62 eines Durchmessers von 400 nm aufgedruckt, die zweite Abstandsschicht 58 mit einer Druckfarbe mit monodispersen Dispersionspartikeln 64 mit einem Durchmesser von 300 nm. Entsprechend der unterschiedlichen Größe der Dispersionspartikel 62, 64 treten auf der Vorder- und Rückseite des Dünnschichtelements 50 unterschiedliche Farbkippeffekte auf. Es versteht sich, dass auch für das symmetrische Sicherheitselement Dispersionspartikel mit Kern-Schale-Aufbau oder Druckfarben mit zusätzlichen Dispersionspartikeln geringeren Durchmessers, wie in den Figuren 3 bis 5 gezeigt, verwendet werden können.

Eine Anwendung des symmetrischen Dünnschichtelements 50 ist in der Fig. 7 dargestellt, die eine Banknote 70 mit einer durchgehenden gestanzten Öffnung 72 zeigt. Die Öffnung 72 ist auf der Vorderseite der Banknote 70 vollständig von dem Dünnschichtelement 50 der Fig. 6 abgedeckt. Wegen der opaken Reflexionsschicht 56 ist von der Vorderseite der Banknote 70 her betrachtet nur der durch die obere Abstandsschicht 54 mit ihren 300 nm durchmessenden Dispersionspartikeln bestimmte Farbkippeffekt sichtbar.

Wird die Banknote 70 von der Rückseite her betrachtet, ist durch die Öffnung 72 die Rückseite des Dünnschichtelementes 50, und damit nur der zweite, durch die untere Abstandsschicht 58 und die 220 nm großen Dispersionspartikel bestimmte Farbkippeffekt erkennbar. Der von beiden Seiten unterschiedliche Farbkippeffekt ist auch für Laien leicht zu überprüfen, jedoch schwer nachzuahmen und erhöht somit die Sicherheit der mit dem Sicherheitselement 50 versehenen Banknote beträchtlich.

Das Sicherheitselement 80 des in Fig. 8 gezeigten Ausführungsbeispiels stellt ein so genanntes Color-Shift-Hologramm dar. Das Sicherheitselement 80 enthält ein Dünnschichtelement 82 mit Farbkippeffekt, das zusätzlich mit einer flächigen Beugungsstruktur 84 versehen ist. Dazu ist auf einer Trägerfolie 86 eine Prägelackschicht 88 aufgebracht, in die eine Beugungsstruktur 84 eingeprägt ist. Auf die Prägelackschicht 88 ist eine semitransparente Absorberschicht 90 mit einer Transmission zwischen 25% und 75%, im Ausführungsbeispiel von etwa 50%, aufgedampft.

Auf die Absorberschicht 90 ist eine Abstandsschicht 92 aufgebracht, die durch eine oben beschriebene Druckschicht mit Dispersionspartikeln monomodaler oder oligomodaler Größenverteilung gebildet ist. Während in der Fig. 8 der Einfachheit halber lediglich der Fall einer monodispersen Spezies von Dispersionspartikeln 94 illustriert ist, versteht es sich, dass auch alle anderen beschriebenen Dispersionspartikel zum Einsatz kommen können.

Die Abstandsschicht 92 ist mit einer Reflektorschicht 96, im Ausführungsbeispiel aus Aluminium, beschichtet. Beim Aufbringen der Absorberschicht 90, der Abstandsschicht 92 und der Reflektorschicht 96 setzt sich die flächige Beugungsstruktur 84 der Prägelackschicht 88 nach oben in die aufgebrachten Schichten fort, so dass beim fertig gestellten Color-Shift-Hologramm 80 alle Teilschichten eine Beugungsstruktur aufweisen. Das Anwendungsgebiet solcher drucktechnisch erzeugter Color-Shift-Hologramme 80 ist ebenso breit und vielseitig wie das herkömmlicher Beugungshologramme.

Die in Zusammenhang mit der Fig. 6 beschriebenen symmetrischen Dünnschichtelemente 50 können zur Herstellung einer Druckfarbe mit optisch variablen Farbpigmenten genutzt werden. Eine solche Druckfarbe ist in Fig. 9 schematisch dargestellt. Zur Herstellung der Druckfarbe 100 wird auf ein Substrat ein Dünnschichtelement 50 mit Farbkippeffekt, wie in Zusammenhang mit der Fig. 6 im Detail beschrieben, aufgebracht. Das Dünnschichtelement 50 wird dann von dem Substrat abgelöst und das abgelöste Dünnschichtelement auf eine gegebene Partikelgröße gemahlen. Die Partikel werden dann als optisch variable Farbpigmente 102 in ein Bindemittel 100 eingebracht. Auf diese Weise lassen sich optisch variable Farbpigmente für Druckfarben einfach und kostengünstig herstellen.

## Patentansprüche

1. Sicherheitselement für Sicherheitspapiere, Wertdokumente und dergleichen mit einem Dünnschichtelement (12) mit Farbkippeffekt, das eine Reflexionsschicht (14), eine Absorberschicht (18) und eine zwischen Reflexionsschicht (14) und Absorberschicht (18) angeordnete Abstandsschicht (16) aufweist, **dadurch gekennzeichnet, dass** die Abstandsschicht (16) durch eine Druckschicht mit Dispersionspartikeln (20) mit monomodaler, das heisst nur Dispersionspartikel mit einer bestimmten Grösse, oder oligomodaler, das heisst mit wenigen, voneinander abgegrenzten Grössen, Größenverteilung gebildet ist.

2. Sicherheitselement nach Anspruch 1, **dadurch gekennzeichnet, dass** die Druckschicht eine Hauptspezies von im Wesentlichen kugelförmigen, monodispersen Dispersionspartikeln (20) enthält, deren Durchmesser die Dicke der Abstandsschicht (16) bestimmt.

3. Sicherheitselement nach Anspruch 2, **dadurch gekennzeichnet, dass** die Dispersionspartikel (20) der Hauptspezies einen Durchmesser aufweisen, der zwischen etwa 100 nm und etwa 1500 nm, bevorzugt zwischen etwa 200 nm und etwa 500 nm liegt.

4. Sicherheitselement nach Anspruch 2 oder 3, **dadurch gekennzeichnet, dass** die Druckschicht einen Monolayer oder Submonolayer der Dispersionspartikel (20) der Hauptspezies umfasst.

5. Sicherheitselement nach wenigstens einem der Ansprüche 2 bis 4, **dadurch gekennzeichnet, dass** die Dispersionspartikel (20) der Hauptspezies eine Schmelztemperatur im Bereich von 50°C bis 250°C aufweisen.

6. Sicherheitselement nach wenigstens einem der Ansprüche 2 bis 5, **dadurch gekennzeichnet, dass** die Dispersionspartikel (20) der Hauptspezies aus Polystyrol, Styrol-Acryl-Nitril-Copolymerisate (SAN), aromatische Polyester oder Polyamide gebildet sind.

7. Sicherheitselement nach wenigstens einem der Ansprüche 2 bis 4, **dadurch gekennzeichnet, dass** die Dispersionspartikel (24) der Hauptspezies einen Kern-Schale-Aufbau mit einem hochschmelzenden Kern (26) und einer leicht filmbildenden Schale (28) aufweisen.

8. Sicherheitselement nach Anspruch 7, **dadurch gekennzeichnet, dass** der Kern (26) der Dispersionspartikel aus einem Hartpolymer wie Polystyrol, PMMA, Styrol-Acryl-Nitril-Copolymerisate(SAN) oder aromatische Polyester, und die Schale (28) aus PMMA, Polybutadien oder Polyisopren gebildet ist.

9. Sicherheitselement nach wenigstens einem der Ansprüche 2 bis 8, **dadurch gekennzeichnet, dass** die Druckschicht neben den Dispersionspartikeln (34) der Hauptspezies auch Dispersionspartikel (36) mit geringerer Größe enthält, die in Zwischenräumen (38) der Dispersionspartikel (34) der Hauptspezies angeordnet sind.

10. Sicherheitselement nach wenigstens einem der Ansprüche 1 bis 9, **dadurch gekennzeichnet, dass** die Reflexionsschicht (14) opak ist.

11. Sicherheitselement nach wenigstens einem der Ansprüche 1 bis 10, **dadurch gekennzeichnet, dass** die Reflexionsschicht (14) durch eine semi-transparente Metallschicht gebildet ist.

12. Sicherheitselement nach wenigstens einem der Ansprüche 1 bis 10, **dadurch gekennzeichnet, dass** die Reflexionsschicht (14) durch eine transparente Reflexionsschicht gebildet ist, die einen von der Druckschicht (16) verschiedenen Brechungsindex aufweist.

13. Sicherheitselement nach wenigstens einem der Ansprüche 1 bis 12, **dadurch gekennzeichnet, dass** die Druckschicht zwei oder mehrere Teilschichten umfasst, die jeweils im Wesentlichen kugelförmige, monodisperse Dispersionspartikel mit voneinander verschiedenem Brechungsindex enthalten.

14. Sicherheitselement nach Anspruch 13, **dadurch gekennzeichnet, dass** zumindest zwei Teilschichten durch eine semitransparente Metallschicht getrennt sind.

15. Sicherheitselement nach Anspruch 13 oder 14, **dadurch gekennzeichnet, dass** zumindest zwei Teilschichten unmittelbar übereinander angeordnet sind.

16. Sicherheitselement nach wenigstens einem der Ansprüche 1 bis 15, **dadurch gekennzeichnet, dass** das Dünnschichtelement (50) auf der von der Abstandsschicht (52) abgewandten Seite der Reflexionsschicht (56) eine zweite Absorberschicht (60) und eine zwischen der zweiten Absorberschicht (60) und der Reflexionsschicht (56) angeordnete zweite Abstandsschicht (58) aufweist, so dass ein Dünnschichtelement (50) mit von beiden Seiten sichtbaren Farbkippeffekten entsteht, wobei die zweite Abstandsschicht (58) durch eine zweite Druckschicht mit Dispersionspartikeln (64) mit monomodaler oder oligomodaler Größenverteilung gebildet ist.

17. Sicherheitselement nach Anspruch 16, **dadurch gekennzeichnet, dass** die zweite Druckschicht eine Hauptspezies von im Wesentlichen kugelförmigen, monodispersen Dispersionspartikeln (64) enthält, wie in wenigstens einem der Ansprüche 3 bis 9 beschrieben.

18. Sicherheitselement nach Anspruch 17, **dadurch gekennzeichnet, dass** die erste und zweite Druckschicht (54, 58) jeweils eine Hauptspezies (62, 64) mit unterschiedlichem Durchmesser und/oder unterschiedlichem Brechungsindex enthalten, so dass von den beiden Seiten des Sicherheitselements (50) unterschiedliche Farbkippeffekte erkennbar sind.

19. Sicherheitselement nach wenigstens einem der Ansprüche 1 bis 18, **dadurch gekennzeichnet, dass** in den Zwischenräumen der Dispersionspartikel eine Matrixfüllung (30; 44) aus Polymermaterial angeordnet ist.

20. Sicherheitselement nach wenigstens einem der Ansprüche 1 bis 19, **dadurch gekennzeichnet, dass** das Dünnschichtelement (80) mit einer flächigen Beugungsstruktur (84) versehen ist.

21. Sicherheitselement nach Anspruch 20, **dadurch gekennzeichnet, dass** die Absorberschicht (90), die Abstandsschicht (92) und die Reflexionsschicht (96) in dieser Reihenfolge auf einem Träger (86, 88) mit der flächigen Beugungsstruktur (84)angeordnet sind.

22. Sicherheitselement nach Anspruch 20, **dadurch gekennzeichnet, dass** die Reflexionsschicht, die Abstandsschicht und die Absorberschicht in dieser Reihenfolge auf einem Träger mit der flächigen Beugungsstruktur angeordnet sind.

23. Sicherheitselement nach wenigstens einem der Ansprüche 20 bis 22, **dadurch gekennzeichnet, dass** die Absorberschicht (90) eine Transmission zwischen 25% und 75% aufweist.

24. Sicherheitselement nach wenigstens einem der Ansprüche 20 bis 23, **dadurch gekennzeichnet, dass** die flächige Beugungsstruktur durch eine Prägestruktur (86, 88) gebildet ist.

25. Sicherheitselement nach wenigstens einem der Ansprüche 1 bis 24, **dadurch gekennzeichnet, dass** das Sicherheitselement (12; 50; 80) einen Sicherheitsstreifen, einen Sicherheitsfaden, ein Sicherheitsband, ein Patch oder ein Transferelement zum Aufbringen auf ein Sicherheitspapier, Wertdokument und dergleichen bildet.

26. Sicherheitspapier für die Herstellung von Sicherheitsdokumenten, wie Banknoten, Ausweiskarten oder dergleichen, das mit einem Sicherheitselement (12; 50; 80) nach wenigstens einem der Ansprüche 1 bis 25 ausgestattet ist.

27. Sicherheitspapier nach wenigstens einem der Ansprüche 16 bis 18 und nach Anspruch 26, mit wenigstens einem mit dem Sicherheitselement bedeckten Fensterbereich oder Loch.

28. Wertdokument, wie Banknote, Ausweiskarte oder dergleichen, das mit einem Sicherheitselement (12; 50; 80) nach wenigstens einem der Ansprüche 1 bis 25 ausgestattet ist.

29. Wertdokument (70) nach wenigstens einem der Ansprüche 16 bis 18 und nach Anspruch 27, mit wenigstens einem mit dem Sicherheitselement (50) bedeckten Fensterbereich oder Loch (72).

30. Verwendung eines Sicherheitselements nach wenigstens einem der Ansprüche 1 bis 25, eines Sicherheitspapiers nach Anspruch 26 oder 27, oder eines Wertdokuments nach Anspruch 28 oder 29 zur Sicherung von Waren beliebiger Art.

31. Verfahren zur Herstellung eines Sicherheitselements für Sicherheitspapiere, Wertdokumente und dergleichen, das ein Dünnschichtelement mit Farbkippeffekt enthält, welches eine Reflexionsschicht, eine Absorberschicht und eine zwischen Reflexionsschicht und Absorberschicht angeordnete Abstandsschicht aufweist, **dadurch gekennzeichnet, dass** die Abstandsschicht in einem Druckverfahren mit einer Druckfarbe mit Dispersionspartikeln mit monomodaler, das heisst nur Dispersionspartikel mit einer bestimmten Grösse oder oligomodaler, das heisst mit wenigen, voneinander abgegrenzten Grössen, Größenverteilung aufgebracht wird.

32. Verfahren nach Anspruch 31, **dadurch gekennzeichnet, dass** die Abstandsschicht mittels Tiefdruck, Flexodruck oder Offsetdruck aufgebracht wird.

33. Verfahren nach Anspruch 31 oder 32, **dadurch gekennzeichnet, dass** eine Druckfarbe verwendet wird, die eine Hauptspezies von im Wesentlichen kugelförmigen, monodispersen Dispersionspartikeln enthält.

34. Verfahren nach wenigstens einem der Ansprüche 31 bis 33, **dadurch gekennzeichnet, dass** der Feststoffanteil der Farbe und die Übertragungsmenge beim Druckvorgang so eingestellt werden, dass sich auf der Reflexionsschicht überwiegend ein Monolayer oder Submonolayer mit den Dispersionspartikeln bildet.

35. Verfahren nach wenigstens einem der Ansprüche 31 bis 34, **dadurch gekennzeichnet, dass** die aufgedruckte Abstandsschicht einem Temperaturschritt unterworfen wird, in dem zumindest ein Bestandteil der Druckfarbe aufschmilzt.

36. Verfahren nach Anspruch 35, **dadurch gekennzeichnet, dass** die Druckfarbe Dispersionspartikel enthält, die bei dem Temperaturschritt aufschmelzen.

37. Verfahren nach Anspruch 35, **dadurch gekennzeichnet, dass** die Druckfarbe Dispersionspartikel mit einem Kern-Schale-Aufbau mit einem hochschmelzenden Kern und einer leicht filmbildenden Schale aufweist, wobei die Schalen der Dispersionspartikel bei dem Temperaturschritt schmelzen und verfilmen.

38. Verfahren nach Anspruch 35, **dadurch gekennzeichnet, dass** die Druckfarbe neben einer Hauptspezies von Dispersionspartikeln, deren Durchmesser die Dicke der Abstandsschicht bestimmt, Dispersionspartikel mit geringerer Größe enthält, die bei dem Temperaturschritt aufschmelzen und verfilmen.

39. Verfahren nach wenigstens einem der Ansprüche 31 bis 38, **dadurch gekennzeichnet, dass** die Absorberschicht, die Abstandsschicht und die Reflexionsschicht in dieser Reihenfolge auf einem Träger mit einer flächigen Beugungsstruktur aufgebracht werden.

40. Verfahren nach wenigstens einem der Ansprüche 31 bis 38, **dadurch gekennzeichnet, dass** die Reflexionsschicht, die Abstandsschicht und die Absorberschicht in dieser Reihenfolge auf einem Träger mit der flächigen Beugungsstruktur aufgebracht werden.

41. Verfahren nach Anspruch 39 oder 40, **dadurch gekennzeichnet, dass** die Absorberschicht auf den Träger oder die Abstandsschicht aufgedampft wird.

42. Verfahren nach wenigstens einem der Ansprüche 31 bis 38, **dadurch gekennzeichnet, dass** das Dünnschichtelement auf der von der Abstandsschicht abgewandten Seite der Reflexionsschicht eine zweite Abstandsschicht und eine zweite Absorberschicht aufweist, wobei die zweite Abstandsschicht in einem Druckverfahren mit einer Druckfarbe mit Dispersionspartikeln mit monomodaler oder oligomodaler Größenverteilung aufgebracht wird, so dass ein Dünnschichtelement mit von beiden Seiten sichtbaren Farbkippeffekten entsteht.

43. Verfahren nach Anspruch 42, **dadurch gekennzeichnet, dass** für die zweite Abstandsschicht eine Druckfarbe verwendet wird, die eine Hauptspezies von im Wesentlichen kugelförmigen, monodispersen Dispersionspartikeln enthält.

44. Verfahren nach Anspruch 42 oder 43, **dadurch gekennzeichnet, dass** für die erste und zweite Abstandsschicht Druckfarben verwendet werden, die jeweils eine Hauptspezies mit unterschiedlichem Durchmesser und/oder unterschiedlichem Brechungsindex enthalten, so dass bei dem Dünnschichtelement von den beiden Seiten unterschiedliche Farbkippeffekte erkennbar sind.

45. Verfahren nach wenigstens einem der Ansprüche 31 bis 44, **dadurch gekennzeichnet, dass** das Aufdrucken der Abstandsschicht(en) von Rolle mit einer über die Bahnbreite gleichmäßigen Schichtdicke erfolgt.

46. Druckfarbe (100) mit optisch variablen Farbpigmenten, die durch Interferenzschicht-Partikel (102) gebildet sind, deren Schichtaufbau eine Reflexionsschicht, eine Absorberschicht und eine zwischen Reflexionsschicht und Absorberschicht angeordnete Abstandsschicht aufweist, wobei die Abstandsschicht in einem Druckverfahren mit Dispersionspartikeln mit monomodaler, das heisst nur Dispersionspartikel mit einer bestimmten Grösse, oder oligomodaler, das heisst mit wenigen, voneinander abgegrenzten Grössen, Größenverteilung gebildet ist, oder deren Schichtaufbau eine erste Absorberschicht (52), eine erste Abstandsschicht (54), eine Reflexionsschicht (56), eine zweite Abstandsschicht (58) und eine zweite Absorberschicht (60) umfasst, wobei die erste Abstandsschicht (54) zwischen der Reflexionsschicht (56) und der ersten Absorberschicht (52) angeordnet ist, die zweite Abstandsschicht (58) zwischen der Reflexionsschicht (56) und der zweiten Absorberschicht (60) angeordnet ist, und wobei die erste und zweite Abstandsschicht (54, 58) durch eine erste beziehungsweise zweite Druckschicht mit Dispersionspartikeln (62, 64) mit monomodaler, das heisst nur Dispersionspartikel mit einer bestimmten Grösse, oder oligomodaler, das heisst mit wenigen, voneinander abgegrenzten Grössen, Größenverteilung gebildet sind.

47. Druckfarbe (100) nach Anspruch 46, **dadurch gekennzeichnet, dass** die erste und zweite Druckschicht jeweils eine Hauptspezies von im Wesentlichen kugelförmigen, monodispersen Dispersionspartikeln (62, 64) enthalten, deren Durchmesser die Dicke der ersten bzw. zweiten Abstandsschicht (54, 58) bestimmen.

48. Druckfarbe (100) nach Anspruch 47, **dadurch gekennzeichnet, dass** die Dispersionspartikel (62, 64) der Hauptspezies der ersten und/oder zweiten Druckschicht einen Durchmesser aufweisen, der zwischen etwa 100 nm und etwa 1500 nm, bevorzugt zwischen etwa 200 nm und etwa 500 nm liegt.

49. Druckfarbe (100) nach wenigstens einem der Ansprüche 46 bis 48, **dadurch gekennzeichnet, dass** die erste und/ oder zweite Druckschicht jeweils einen Monolayer oder Submonolayer der Dispersionspartikel (62, 64) der Hauptspezies umfasst.

50. Druckfarbe (100) nach wenigstens einem der Ansprüche 46 bis 49, **dadurch gekennzeichnet, dass** die Dispersionspartikel (62, 64) der Hauptspezies der ersten und/ oder zweiten Druckschicht eine Schmelztemperatur im Bereich von 50°C bis 250°C aufweisen.

51. Druckfarbe (100) nach wenigstens einem der Ansprüche 46 bis 50, **dadurch gekennzeichnet, dass** die Dispersionspartikel (62, 64) der Hauptspezies der ersten und/oder zweiten Druckschicht aus Polystyrol, Styrol-Acryl-Nitril-Copolymerisate (SAN), aromatische Polyester oder Polyamide gebildet sind.

52. Druckfarbe (100) nach wenigstens einem der Ansprüche 46 bis 49, **dadurch gekennzeichnet, dass** die Dispersionspartikel der Hauptspezies der ersten und/oder zweiten Druckschicht einen Kern-Schale-Aufbau mit einem hochschmelzenden Kern und einer leicht filmbildenden Schale aufweisen.

53. Druckfarbe (100) nach Anspruch 52, **dadurch gekennzeichnet, dass** der Kern der Dispersionspartikel aus einem Hartpolymer, wie Polystyrol, PMMA, Styrol-Acryl-Nitril-Copolymerisate (SAN) oder aromatische Polyester, und die Schale aus PMMA, Polybutadien oder Polyisopren gebildet ist.

54. Druckfarbe (100) nach wenigstens einem der Ansprüche 46 bis 49, **dadurch gekennzeichnet, dass** die erste und/ oder zweite Druckschicht neben den Dispersionspartikeln der Hauptspezies auch Dispersionspartikel mit geringerer Größe enthält, die in Zwischenräumen der Dispersionspartikel der Hauptspezies angeordnet sind.

55. Verfahren zur Herstellung einer Druckfarbe mit optisch variablen Farbpigmenten, bei dem auf ein Substrat ein Dünnschichtelement mit Farbkippeffekt aufgebracht wird, indem auf das Substrat eine Reflexionsschicht, eine Absorberschicht und eine Abstandsschicht aufgebracht werden, wobei die Abstandsschicht in einem Druckverfahren mit Dispersionspartikeln mit monomodaler, das heisst nur Dispersionspartikel mit einer bestimmten Grössen, oder oligomodaler, das heisst mit wenigen, voneinander abgegrenzten Grössen, Größenverteilung aufgebracht wird, das Dünnschichtelement von dem Substrat abgelöst wird, das abgelöste Dünnschichtelement auf eine gegebene Partikelgröße gemahlen und die Partikel als optisch variable Farbpigmente in ein Bindemittel eingebracht werden.

56. Verfahren zur Herstellung einer Druckfarbe mit optisch variablen Farbpigmenten, bei dem
a) auf ein Substrat ein Dünnschichtelement mit Farbkippeffekt aufgebracht wird, indem auf das Substrat in dieser Reihenfolge eine erste Absorberschicht, eine erste Abstandsschicht, eine Reflexionsschicht, eine zweite Abstandsschicht und eine zweite Absorberschicht aufgebracht werden,
wobei die erste und zweite Abstandsschicht jeweils in einem Druckverfahren mit einer Druckfarbe mit Dispersionspartikeln mit monomodaler, das heisst nur Dispersionspartikel mit einer bestimmten Grösse, oder oligomodaler, das heisst mit wenigen, voneinander abgegrenzten Grössen, Größenverteilung aufgebracht werden,
b) das Dünnschichtelement von dem Substrat abgelöst wird,
c) das abgelöste Dünnschichtelement auf eine gegebene Partikelgröße gemahlen wird, und
d) die Partikel als optisch variable Farbpigmente in ein Bindemittel eingebracht werden.

57. Verfahren nach Anspruch 55 oder 56, **dadurch gekennzeichnet, dass** die Abstandsschichten mittels Tiefdruck, Flexodruck oder Offsetdruck aufgebracht werden.

58. Verfahren nach wenigstens einem der Ansprüche 55 bis 57, **dadurch gekennzeichnet, dass** für das Aufbringen der Abstandschichten Druckfarben verwendet werden, die eine Hauptspezies von im Wesentlichen kugelförmigen, monodispersen Dispersionspartikeln enthalten.

59. Verfahren nach wenigstens einem der Ansprüche 55 bis 58, **dadurch gekennzeichnet, dass** der Feststoffanteil der Farbe und die Übertragungsmenge beim Druckvorgang so eingestellt werden, dass sich auf der Reflexionsschicht überwiegend ein Monolayer oder Submonolayer mit den Dispersionspartikeln bildet.

60. Verfahren nach wenigstens einem der Ansprüche 55 bis 59, **dadurch gekennzeichnet, dass** die Druckfarbe nach dem Aufbringen einem Temperaturschritt unterworden wird, in dem zumindest ein Bestandteil der Druckfarbe aufschmilzt.

61. Verfahren nach Anspruch 60, **dadurch gekennzeichnet, dass** die Druckfarbe Dispersionspartikel enthält, die bei dem Temperaturschritt aufschmelzen.

62. Verfahren nach Anspruch 60, **dadurch gekennzeichnet, dass** die Druckfarbe Dispersionspartikel mit einem Kern-Schale-Aufbau mit einem hochschmelzenden Kern und einer leicht filmbildenden Schale aufweist, wobei die Schalen der Dispersionspartikel bei dem Temperaturschritt schmelzen und verfilmen.

63. Verfahren nach Anspruch 60, **dadurch gekennzeichnet, dass** die Druckfarbe neben einer Hauptspezies von Dispersionspartikeln, deren Durchmesser die Dicke der Abstandsschicht bestimmt, Dispersionspartikel mit geringerer Größe enthält, die bei dem Temperaturschritt aufschmelzen und verfilmen.

## Claims

1. A security element for security papers, value documents and the like with a thin-film element (12) with a color shift effect having a reflecting layer (14), an absorber layer (18) and a spacer layer (16) disposed between reflecting layer (14) and absorber layer (18), **characterized in that** the spacer layer (16) is formed by a printed layer with dispersion particles (20) having a monomodal size distribution, i.e. only dispersion particles with a certain size, or an oligomodal size distribution, i.e. with few, mutually delimited sizes.

2. The security element according to claim 1, **characterized in that** the printed layer contains a major species of substantially spherical, monodisperse dispersion particles (20) whose diameter determines the thickness of the spacer layer (16).

3. The security element according to claim 2, **characterized in that** the dispersion particles (20) of the major species have a diameter that is between about 100 nm and about 1500 nm, preferably between about 200 nm and about 500 nm.

4. The security element according to claim 2 or 3, **characterized in that** the printed layer comprises a monolayer or submonolayer of the dispersion particles (20) of the major species.

5. The security element according to at least one of claims 2 to 4, **characterized in that** the dispersion particles (20) of the major species have a melting temperature in the range of 50°C to 250°C.

6. The security element according to at least one of claims 2 to 5, **characterized in that** the dispersion particles (20) of the major species are formed from polystyrene, styrene-acrylonitrile copolymers (SAN), aromatic polyesters or polyamides.

7. The security element according to at least one of claims 2 to 4, **characterized in that** the dispersion particles (24) of the major species have a core-shell structure with a high-melting core (26) and a readily film-forming shell (28).

8. The security element according to claim 7, **characterized in that** the core (26) of the dispersion particles is formed from a hard polymer such as polystyrene, PMMA, styrene-acrylonitrile copolymers (SAN) or aromatic polyesters, and the shell (28) from PMMA, polybutadiene or polyisoprene.

9. The security element according to at least one of claims 2 to 8, **characterized in that** the printed layer contains not only the dispersion particles (34) of the major species but also dispersion particles (36) of smaller size which are disposed in interstices (38) of the dispersion particles (34) of the major species.

10. The security element according to at least one of claims 1 to 9, **characterized in that** the reflecting layer (14) is opaque.

11. The security element according to at least one of claims 1 to 10, **characterized in that** the reflecting layer (14) is formed by a semitransparent metal layer.

12. The security element according to at least one of claims 1 to 10, **characterized in that** the reflecting layer (14) is formed by a transparent reflecting layer having a refractive index different from the printed layer (16).

13. The security element according to at least one of claims 1 to 12, **characterized in that** the printed layer comprises two or more sublayers each containing substantially spherical, monodisperse dispersion particles with mutually different refractive indices.

14. The security element according to claim 13, **characterized in that** at least two sublayers are separated by a semitransparent metal layer.

15. The security element according to claim 13 or 14, **characterized in that** at least two sublayers are immediately superposed.

16. The security element according to at least one of claims 1 to 15, **characterized in that** the thin-film element (50) has, on the side of the reflecting layer (56) facing away from the spacer layer (52), a second absorber layer (60) and a second spacer layer (58) disposed between the second absorber layer (60) and the reflecting layer (56), resulting in a thin-film element (50) with color shift effects visible from both sides, the second spacer layer (58) being formed by a second printed layer with dispersion particles (64) with monomodal or oligomodal size distribution.

17. The security element according to claim 16, **characterized in that** the second printed layer contains a major species of substantially spherical, monodisperse dispersion particles (64) as described in at least one of claims 3 to 9.

18. The security element according to claim 17, **characterized in that** the first and second printed layers (54, 58) each contain a major species (62, 64) with a different diameter and/or different refractive index, so that different color shift effects are recognizable from both sides of the security element (50).

19. The security element according to at least one of claims 1 to 18, **characterized in that** a matrix filling (30; 44) consisting of polymer material is disposed in the interstices of the dispersion particles.

20. The security element according to at least one of claims 1 to 19, **characterized in that** the thin-film element (80) is provided with an areal diffraction structure (84).

21. The security element according to claim 20, **characterized in that** the absorber layer (90), the spacer layer (92) and the reflecting layer (96) are disposed in this order on a carrier (86, 88) with the areal diffraction structure (84).

22. The security element according to claim 20, **characterized in that** the reflecting layer, the spacer layer and the absorber layer are disposed in this order on a carrier with the areal diffraction structure.

23. The security element according to at least one of claims 20 to 22, **characterized in that** the absorber layer (90) has a transmission between 25% and 75%.

24. The security element according to at least one of claims 20 to 23, **characterized in that** the areal diffraction structure is formed by an embossed structure (86, 88).

25. The security element according to at least one of claims 1 to 24, **characterized in that** the security element (12; 50; 80) forms a security strip, a security thread, a security band, a patch or a transfer element for application to a security paper, value document and the like.

26. A security paper for producing security documents, such as bank notes, identity cards or the like, which is equipped with a security element (12; 50; 80) according to at least one of claims 1 to 25.

27. The security paper according to at least one of claims 16 to 18 and according to claim 26, having at least one window area or hole covered with the security element.

28. A value document, such as a bank note, identity card or the like, which is equipped with a security element (12; 50; 80) according to at least one of claims 1 to 25.

29. The value document (70) according to at least one of claims 16 to 18 and according to claim 27, having at least one window area or hole (72) covered with the security element (50).

30. Use of a security element according to at least one of claims 1 to 25, a security paper according to claim 26 or 27, or a value document according to claim 28 or 29, for protecting goods of any kind.

31. A method for producing a security element for security papers, value documents and the like which contains a thin-film element with a color shift effect having a reflecting layer, an absorber layer and a spacer layer disposed between reflecting layer and absorber layer, **characterized in that** the spacer layer is applied in a printing process with a printing ink with dispersion particles having a monomodal size distribution, i.e. only dispersion particles with a certain size, or an oligomodal size distribution, i.e. with few, mutually delimited sizes.

32. The method according to claim 31, **characterized in that** the spacer layer is applied by means of gravure printing, flexographic printing or offset printing.

33. The method according to claim 31 or 32, **characterized in that** a printing ink is used which contains a major species of substantially spherical, monodisperse dispersion particles.

34. The method according to at least one of claims 31 to 33, **characterized in that** the solids content of the ink and the transferred amount during the printing operation are so adjusted that predominantly a monolayer or submonolayer with the dispersion particles forms on the reflecting layer.

35. The method according to at least one of claims 31 to 34, **characterized in that** the printed spacer layer is subjected to a temperature step in which at least a component of the printing ink melts superficially.

36. The method according to claim 35, **characterized in that** the printing ink contains dispersion particles which melt superficially during the temperature step.

37. The method according to claim 35, **characterized in that** the printing ink has dispersion particles with a core-shell structure with a high-melting core and a readily film-forming shell, the shells of the dispersion particles melting and forming a film during the temperature step.

38. The method according to claim 35, **characterized in that** the printing ink contains not only a major species of dispersion particles whose diameter determines the thickness of the spacer layer, but also dispersion particles of smaller size which melt superficially and form a film during the temperature step.

39. The method according to at least one of claims 31 to 38, **characterized in that** the absorber layer, the spacer layer and the reflecting layer are applied in this order to a carrier with an areal diffraction structure.

40. The method according to at least one of claims 31 to 38, **characterized in that** the reflecting layer, the spacer layer and the absorber layer are applied in this order to a carrier with the areal diffraction structure.

41. The method according to claim 39 or 40, **characterized in that** the absorber layer is vapor-deposited on the carrier or the spacer layer.

42. The method according to at least one of claims 31 to 38, **characterized in that** the thin-film element has, on the side of the reflecting layer facing away from the spacer layer, a second spacer layer and a second absorber layer, the second spacer layer being applied in a printing process with a printing ink with dispersion particles having a monomodal or oligomodal size distribution, resulting in a thin-film element with color shift effects visible from both sides.

43. The method according to claim 42, **characterized in that** a printing ink containing a major species of substantially spherical, monodisperse dispersion particles is used for the second spacer layer.

44. The method according to claim 42 or 43, **characterized in that** printing inks containing a major species with a different diameter and/or different refractive index are used for the first and second spacer layers, so that different color shift effects are recognizable from both sides in the thin-film element.

45. The method according to at least one of claims 31 to 44, **characterized in that** the printing of the spacer layer or layers is effected from a roll with a uniform layer thickness over the web width.

46. A printing ink (100) with optically variable coloring pigments which are formed by interference layer particles (102) whose layer structure has a reflecting layer, an absorber layer and a spacer layer disposed between reflecting layer and absorber layer, the spacer layer being formed in a printing process with dispersion particles having a monomodal size distribution, i.e. only dispersion particles with a certain size, or an oligomodal size distribution, i.e. with few, mutually delimited sizes, or whose layer structure comprises a first absorber layer (52), a first spacer layer (54), a reflecting layer (56), a second spacer layer (58) and a second absorber layer (60),
the first spacer layer (54) being disposed between the reflecting layer (56) and the first absorber layer (52), the second spacer layer (58) being disposed between the reflecting layer (56) and the second absorber layer (60), and the first and second spacer layers (54, 58) being formed by first and second printed layers, respectively, with dispersion particles (62, 64) having a monomodal size distribution, i.e. only dispersion particles with a certain size, or an oligomodal size distribution, i.e. with few, mutually delimited sizes.

47. The printing ink (100) according to claim 46, **characterized in that** the first and second printed layers each contain a major species of substantially spherical, monodisperse dispersion particles (62, 64) whose diameters determine the thickness of the first and second spacer layers (54, 58).

48. The printing ink (100) according to claim 47, **characterized in that** the dispersion particles (62, 64) of the major species of the first and/or second printed layer have a diameter which is between about 100 nm and about 1500 nm, preferably between about 200 nm and about 500 nm.

49. The printing ink (100) according to at least one of claims 46 to 48, **characterized in that** the first and/or second printed layer each comprises a monolayer or submonolayer of the dispersion particles (62, 64) of the major species.

50. The printing ink (100) according to at least one of claims 46 to 49, **characterized in that** the dispersion particles (62, 64) of the major species of the first and/or second printed layer have a melting temperature in the range of 50°C to 250°C.

51. The printing ink (100) according to at least one of claims 46 to 50, **characterized in that** the dispersion particles (62, 64) of the major species of the first and/or second printed layer are formed from polystyrene, styrene-acrylonitrile copolymers (SAN), aromatic polyesters or polyamides.

52. The printing ink (100) according to at least one of claims 46 to 49, **characterized in that** the dispersion particles of the major species of the first and/or second printed layer have a core-shell structure with a high-melting core and a readily film-forming shell.

53. The printing ink (100) according to claim 52, **characterized in that** the core of the dispersion particles is formed from a hard polymer, such as polystyrene, PMMA, styrene-acrylonitrile copolymers (SAN) or aromatic polyesters, and the shell from PMMA, polybutadiene or polyisoprene.

54. The printing ink (100) according to at least one of claims 46 to 49, **characterized in that** the first and/or second printed layer contains not only the dispersion particles of the major species but also dispersion particles of smaller size which are disposed in interstices of the dispersion particles of the major species.

55. A method for producing a printing ink with optically variable coloring pigments wherein a thin-film element with a color shift effect is applied to a substrate by applying a reflecting layer, an absorber layer and a spacer layer to the substrate, the spacer layer being applied in a printing process with dispersion particles having a monomodal size distribution, i.e. only dispersion particles with a certain size, or an oligomodal size distribution, i.e. with few, mutually delimited sizes, the thin-film element is detached from the substrate, the detached thin-film element is ground to a given particle size, and the particles are incorporated into a binder as optically variable coloring pigments.

56. A method for producing a printing ink with optically variable coloring pigments, wherein
a) a thin-film element with a color shift effect is applied to a substrate by applying a first absorber layer, a first spacer layer, a reflecting layer, a second spacer layer and a second absorber layer in this order to the substrate, the first and second spacer layers each being applied in a printing process with a printing ink with dispersion particles having a monomodal size distribution, i.e. only dispersion particles with a certain size, or an oligomodal size distribution, i.e. with few, mutually delimited sizes,
b) the thin-film element is detached from the substrate,
c) the detached thin-film element is ground to a given particle size, and
d) the particles are incorporated into a binder as optically variable coloring pigments.

57. The method according to claim 55 or 56, **characterized in that** the spacer layers are applied by means of gravure printing, flexographic printing or offset printing.

58. The method according to at least one of claims 55 to 57, **characterized in that** printing inks containing a major species of substantially spherical, monodisperse dispersion particles are used for applying the spacer layers.

59. The method according to at least one of claims 55 to 58, **characterized in that** the solids content of the ink and the transferred amount during the printing operation are so adjusted that predominantly a monolayer or submonolayer with the dispersion particles forms on the reflecting layer.

60. The method according to at least one of claims 55 to 59, **characterized in that** the printing ink is subjected after application to a temperature step in which at least a component of the printing ink melts superficially.

61. The method according to claim 60, **characterized in that** the printing ink contains dispersion particles which melt superficially during the temperature step.

62. The method according to claim 60, **characterized in that** the printing ink has dispersion particles with a core-shell structure with a high-melting core and a readily film-forming shell, the shells of the dispersion particles melting and forming a film during the temperature step.

63. The method according to claim 60, **characterized in that** the printing ink contains not only a major species of dispersion particles whose diameter determines the thickness of the spacer layer, but also dispersion particles of smaller size which melt superficially and form a film during the temperature step.

## Revendications

1. Elément de sécurité pour des papiers de sécurité, des documents valeur et analogues, avec un élément à couche mince (12) ayant un effet de changement de couleur, présentant une couche de réflexion (14), une couche absorbeuse (18) et une couche d'espacement (16) disposées entre la couche de réflexion (14) et la couche absorbeuse (18), **caractérisé en ce que** la couche d'espacement (16) est formée par une couche d'impression comprenant des particules de dispersion (20) ayant une distribution de taille monomodale, c'est-à-dire seulement des particules de dispersion d'une taille déterminée ou oligomodale, c'est-à-dire avec quelques tailles, délimitées les unes par rapport aux autres.

2. Elément de sécurité selon la revendication 1, **caractérisé en ce que** la couche d'impression contient une espèce principale de particules de dispersion (20) monodisperses, à forme sensiblement sphérique, dont le diamètre détermine l'épaisseur de la couche d'espacement (16).

3. Elément de sécurité selon la revendication 2, **caractérisé en ce que** les particules de dispersion (20) des espèces principales présentent un diamètre dans la fourchette comprise entre à peu près 100 nm et à peu près 1500 nm, de préférence entre à peu près 200 nm et à peu près 500 nm.

4. Elément de sécurité selon la revendication 2 ou 3, **caractérisé en ce que** la couche d'impression comprend une monocouche ou une sub-monocouche des particules de dispersion (20) de l'espèce principale.

5. Elément de sécurité selon au moins l'une des revendications 2 à 4, **caractérisé en ce que** les particules de dispersion (20) de l'espèce principale présentent une température de fusion dans la fourchette de 50°C à 250°C.

6. Elément de sécurité selon au moins l'une des revendications 2 à 5, **caractérisé en ce que** les particules de dispersion (20) de l'espèce principale sont formées de polystyrènes, de copolymérisats styrène-acryl-nitril (SAN), de polyesters aromatiques ou de polyamides.

7. Elément de sécurité selon au moins l'une des revendications 2 à 4, **caractérisé en ce que** les particules de dispersion (24) de l'espèce principale présentent une structure à noyau-coquille ayant un noyau (26) à haut point de fusion et une coquille (28) légèrement filmogène.

8. Elément de sécurité selon la revendication 7, **caractérisé en ce que** le noyau (26) des particules de dispersion est formé d'un polymère dur tel que du polystyrène, du PMMA, des copolymérisats styrène-acryl-nitril (SAN) ou de polyesters aromatiques, et la coquille (28) est formée de PMMA, de polybutadiène ou de polyisoprène.

9. Elément de sécurité selon au moins l'une des revendications 2 à 8, **caractérisé en ce que** la couche d'impression contient outre les particules de dispersion (34) des espèces principales également des particules de dispersion (36) de plus petites tailles, disposées dans les espaces intermédiaires (38) des particules de dispersion (34) de l'espèce principale.

10. Elément de sécurité selon au moins l'une des revendications 1 à 9, **caractérisé en ce que** la couche de réflexion (14) est opaque.

11. Elément de sécurité selon au moins l'une des revendications 1 à 10, **caractérisé en ce que** la couche de réflexion (14) est formée par une couche métallique semi-transparente.

12. Elément de sécurité selon au moins l'une des revendications 1 à 10, **caractérisé en ce que** la couche de réflexion (14) est formée par une couche de réflexion transparente, présentant un indice de réfraction différent de celui de la couche d'impression (16).

13. Elément de sécurité selon au moins l'une des revendications 1 à 12, **caractérisé en ce que** la couche d'impression comprend deux couches partielles ou plus contenant chacune des particules de dispersion monodisperses essentiellement à forme sphérique, ayant des indices de réfraction différents les unes des autres.

14. Elément de sécurité selon la revendication 13, **caractérisé en ce qu'**au moins deux couches partielles sont séparées par une couche métallique semi-transparente.

15. Elément de sécurité selon la revendication 13 ou 14, **caractérisé en ce qu'**au moins deux couches partielles sont disposées directement l'une au-dessous de l'autre.

16. Elément de sécurité selon au moins l'une des revendications 1 à 15, **caractérisé en ce que** l'élément à couche mince (50) présente, sur la face, opposée à la couche d'espacement (52), de la couche de réflexion (56) une deuxième couche absorbeuse (60) et une deuxième couche d'espacement (58), disposée entre la deuxième couche absorbeuse (60) et la couche de réflexion (56), de manière que soit créé un élément à couche mince (50) ayant des effets de changement de couleur visibles des deux côtés, la deuxième couche d'espacement (58) étant formée par une deuxième couche d'impression avec des particules de dispersion (64) à distribution de taille monomodale ou oligomodale.

17. Elément de sécurité selon la revendication 16, **caractérisé en ce que** la deuxième couche d'impression contient une espèce principale formée de particules de dispersion (64) à forme essentiellement sphérique, monodisperses, tel que décrit en au moins l'une des revendications 3 à 9.

18. Elément de sécurité selon la revendication 17, **caractérisé en ce que** la première et la deuxième couches d'impression (54, 58) contiennent chacune une espèce principale (62, 64) de diamètre différent et/ou d'un indice de réfraction différent, de manière que des effets de changement de couleur différents depuis les deux côtés de l'élément de sécurité (50) soient identifiables.

19. Elément de sécurité selon au moins l'une des revendications 1 à 18, **caractérisé en ce qu'**un remplissage matriciel (30 ; 44) en matériau polymère est disposé dans les espaces intermédiaires des particules de dispersion.

20. Elément de sécurité selon au moins l'une des revendications 1 à 19, **caractérisé en ce que** l'élément à couche mince (80) est muni d'une structure à diffraction (84) plate.

21. Elément de sécurité selon la revendication 20, **caractérisé en ce que** la couche absorbeuse (90), la couche d'espacement (92) et la couche de réflexion (96), dans cet ordre de succession, sont disposées sur un support (86, 88) avec la structure à diffraction (84) plate.

22. Elément de sécurité selon la revendication 20, **caractérisé en ce que** la couche de réflexion, la couche d'espacement et la couche d'absorption, dans cet ordre de succession, sont disposées sur un support avec la structure à diffraction plate.

23. Elément de sécurité selon au moins l'une des revendications 20 à 22, **caractérisé en ce que** la couche absorbeuse (90) présente une transmission comprise dans la fourchette entre 25 % et 75 %.

24. Elément de sécurité selon au moins l'une des revendications 20 à 23, **caractérisé en ce que** la structure à diffraction plate est formée par une structure réalisée par matriçage (86, 88).

25. Elément de sécurité selon au moins l'une des revendications 1 à 24, **caractérisé en ce que** l'élément de sécurité (12 ; 50 ; 80) forme une bande de sécurité, un fil de sécurité, un ruban de sécurité, une vignette ou un élément de transfert pour application sur un papier de sécurité, un document de valeur et analogue.

26. Papier de sécurité pour la fabrication de documents de sécurité, tels que des billets de banque, des cartes d'identité ou analogues, munis d'un élément de sécurité (12 ; 50 ; 80) selon au moins l'une des revendication 1 à 25.

27. Papier de sécurité selon au moins l'une des revendications 16 à 18 et selon la revendication 26, avec au moins une zone à fenêtre ou un trou, couvert(e) par l'élément de sécurité.

28. Document valeur, tel que billet de banque, carte d'identité ou analogue, muni d'un élément de sécurité (12 ; 50 ; 80) selon au moins l'une des revendications 1 à 25.

29. Document valeur (70) selon au moins l'une des revendications 16 à 18 et selon la revendication 27, avec au moins une zone à fenêtre ou un trou (72) couvert(e) par l'élément de sécurité (50).

30. Utilisation d'un élément de sécurité selon au moins l'une des revendications 1 à 25, d'un papier de sécurité selon la revendication 26 ou 27, ou d'un document valeur selon la revendication 28 ou 29, pour la sécurité de marchandises de type quelconque.

31. Procédé de fabrication d'un élément de sécurité pour des papiers de sécurité, des documents valeur et analogues, contenant un élément à couche mince ayant un effet de changement de couleur, présentant une couche de réflexion, une couche absorbeuse et une couche d'espacement disposée, entre la couche de réflexion et la couche absorbeuse, **caractérisé en ce que** la couche d'espacement est appliquée dans un procédé d'impression, avec une encre d'impression contenant des particules de dispersion ayant une distribution de taille monomodale, c'est-à-dire seulement des particules de dispersion d'une taille déterminée ou oligomodale, c'est-à-dire avec quelques tailles, délimitées les unes par rapport aux autres.

32. Procédé selon la revendication 31, **caractérisé en ce que** la couche d'espacement est appliquée par impression en héliogravure, impression flexographique, ou impression offset.

33. Procédé selon la revendication 31 ou 32, **caractérisé en ce qu'**est utilisée une encre d'impression contenant une espèce principale de particules de dispersion monodisperses, à forme sensiblement sphérique.

34. Procédé selon au moins l'une des revendications 31 à 33, **caractérisé en ce que** la proportion de solides de l'encre et la quantité de transfert lors du processus d'impression sont réglées de manière que, majoritairement, une monocouche ou une sub-monocouche se forme avec les particules de dispersion, sur la couche de réflexion.

35. Procédé selon au moins l'une des revendications 31 à 34, **caractérisé en ce que** la couche d'espacement appliquée par impression est soumise à une étape de température à laquelle au moins un composant de l'encre d'impression entre en fusion.

36. Procédé selon la revendication 35, **caractérisé en ce que** l'encre d'impression contient des particules de dispersion entrant en fusion lors de l'étape de température.

37. Procédé selon la revendication 35, **caractérisé en ce que** l'encre d'impression présente des particules de dispersion ayant une structure de type noyau-coquille, avec un noyau à haut point de fusion et une coquille légèrement filmogène, les coquilles des particules à dispersion fondant et formant un film lors de l'étape de température.

38. Procédé selon la revendication 35, **caractérisé en ce que** l'encre d'impression, outre une espèce principale de particules à dispersion, dont le diamètre détermine l'épaisseur de la couche d'espacement, contient des particules à dispersion de tailles plus petites, qui entrent en fusion et forment un film lors de l'étape de température.

39. Procédé selon au moins l'une des revendications 31 à 38, **caractérisé en ce que** la couche absorbeuse, la couche d'espacement et la couche de réflexion, dans cet ordre de succession, sont appliquées sur un support ayant une structure à diffraction plate.

40. Procédé selon au moins l'une des revendications 31 à 38, **caractérisée en ce que** la couche de réflexion, la couche d'espacement et la couche absorbeuse dans cet ordre de succession sont appliquées sur un support ayant la structure de diffraction plate.

41. Procédé selon la revendication 39 ou 40, **caractérisé en ce que** la couche absorbeuse, sur le support ou la couche d'espacement, est obtenue par évaporation.

42. Procédé selon au moins l'une des revendications 31 à 38, **caractérisé en ce que** l'élément à couche mince présente, sur la face, opposée à la couche d'espacement, de la couche de réflexion, une deuxième couche d'espacement et une deuxième couche absorbeuse, la deuxième couche d'espacement étant appliquée en un procédé d'impression, avec une encre d'impression comprenant des particules de dispersion à distribution de taille monomodale ou oligomodale, de manière qu'un élément à couche mince, ayant des effets de changement de couleur visibles depuis les deux côtés, soit créé.

43. Procédé selon la revendication 42, **caractérisé en ce qu'**on utilise pour la deuxième couche d'espacement une encre d'impression contenant une espèce principale de particules de dispersion monodisperses, à forme sensiblement sphérique.

44. Procédé selon revendication 42 ou 43, **caractérisé en ce qu'**on utilise pour la première et la deuxième couche d'espacement des encres d'impression contenant chacune une espèce principale à diamètre différent et/ou à indice de réfraction différent, de manière que, pour l'élément à couche mince, des effets de changement de couleur différents puissent être identifiés depuis les deux côtés.

45. Procédé selon au moins l'une des revendications 31 à 44, **caractérisé en ce que** de la ou des couches d'espacement se fait depuis un rouleau, avec une épaisseur de couche régulière sur la largeur de la bande.

46. Encre d'impression (100) comprenant des pigments colorés optiquement variables, formés par des particules de couche d'interférence (102), dont la structure de couche présente une couche de réflexion, une couche absorbeuse et une couche d'espacement, disposée entre la couche de réflexion et la couche absorbeuse, la couche d'espacement étant formée en un procédé d'impression avec des particules de dispersion à distribution de taille monomodale, c'est-à-dire seulement des particules de dispersion d'une taille déterminée, ou oligomodale, c'est-à-dire avec quelques tailles, délimitées les unes par rapport aux autres, ou dont la structure de couche comprend une première couche absorbeuse (52), une première couche d'espacement (54), une couche de réflexion (56), une deuxième couche d'espacement (58) et une deuxième couche absorbeuse (60), la première couche d'espacement (54) étant disposée entre la couche de réflexion (56) et la première couche absorbeuse (52), la deuxième couche d'espacement (58) étant disposée entre la couche de réflexion (56) et la deuxième couche absorbeuse (60), la première et la deuxième couches d'espacement (54, 58) étant formées par une première, respectivement une deuxième couche d'impression, comprenant des particules de dispersion (62, 64) à distribution de taille monomodale, c'est-à-dire seulement des particules de dispersion d'une taille déterminée, ou oligomodale, c'est-à-dire avec quelques tailles délimitées les unes par rapport aux autres.

47. Encre d'impression (100) selon la revendication 46, **caractérisé en ce que** la première et la deuxième couches d'impression contiennent chacune une espèce principale de particules de dispersion (62, 64) monodisperses, à forme sensiblement sphérique, dont les diamètres déterminent l'épaisseur de la première ou de la deuxième couche d'espacement (54, 58).

48. Encre d'impression (100) selon la revendication 47, **caractérisé en ce que** les particules de dispersion (62, 64) des espèces principales de la première et/ou de la deuxième couche(s) d'impression présentent un diamètre compris dans la fourchette entre à peu près 100 nm et à peu près 1500 nm, de préférence entre à peu près 200 nm et à peu près 500 nm.

49. Encre d'impression (100) selon au moins l'une des revendications 46 à 48, **caractérisé en ce que** la première et/ou la deuxième couche(s) d'impression comprend/comprennent chacune une monocouche ou une sub-monocouche des particules de dispersion (62, 64) de l'espèce principale.

50. Encre d'impression (100) selon au moins l'une des revendications 46 à 49, **caractérisé en ce que** les particules de dispersion (62, 64) de l'espèce principale de la première et/ou de la deuxième couche(s) d'impression présente(nt) une température de fusion dans la fourchette de 50°C à 250°C.

51. Encre d'impression (100) selon au moins l'une des revendications 46 à 50, **caractérisé en ce que** les particules de dispersion (62, 64) de l'espèce principale de la première et/ou de la deuxième couche(s) d'impression sont formées de polystyrènes, de copolymérisats styrène-acryl-nitril (SAN), de polyesters aromatiques, ou de polyamides.

52. Encre d'impression (100) selon au moins l'une des revendications 46 à 49, **caractérisé en ce que** les particules de dispersion des espèces principales de la première et/ou de la deuxième couche(s) d'impression présentent une structure de type noyau-coquille, avec un noyau à haut point de fusion et une coquille légèrement filmogène.

53. Encre d'impression (100) selon la revendication 52, **caractérisé en ce que** le noyau des particules de dispersion est formé d'un polymère dur, tel que du polystyrène, du PMMA, de copolymérisats styrène-acryl-nitril (SAN), ou de polyesters aromatiques, et la coquille est formée de PMMA, de polybutadiène ou de polyisoprène.

54. Encre d'impression (100) selon au moins l'une des revendications 46 à 49, **caractérisé en ce que** la première et/ou la deuxième couche(s) d'impression, outre les particules à dispersion des espèces principales contient/contiennent également des particules de dispersion de plus petites tailles, disposées dans des espaces intermédiaires des particules de dispersion de l'espèce principale.

55. Procédé de fabrication d'une encre d'impression ayant des pigments colorés optiquement variables, pour lequel, sur un substrat est appliqué un élément à couche mince avec un effet de changement de couleur, en ce qu'on applique sur le substrat une couche de réflexion, une couche absorbeuse et une couche d'espacement, sachant que la couche d'espacement est appliquée dans un procédé d'impression avec des particules de dispersion à distribution de taille monomodale, c'est-à-dire seulement des particules de dispersion d'une taille déterminée, ou oligomodale, c'est-à-dire avec quelques tailles, délimitées les unes par rapport aux autres, l'élément à couche mince est détaché du substrat, l'élément à couche mince détaché est broyé à une grosseur de particules donnée, et les particules sont introduites dans un liant, en tant que pigments de couleur optiquement variables.

56. Procédé de fabrication d'une encre d'impression ayant des pigments de couleur optiquement variables, dans lequel
a) sur un substrat est appliqué un élément à couche mince ayant un effet de changement de couleur, en ce que, sur le substrat, dans cet ordre de succession, sont appliquées une première couche absorbeuse, une première couche d'espacement, une couche de réflexion, une deuxième couche d'espacement et une deuxième couche absorbeuse,
la première et la deuxième couches espacement sont appliquées chacune dans un procédé d'impression avec une encre d'impression ayant des particules de dispersion à distribution de taille monomodale, c'est-à-dire avec seulement des particules de dispersion d'une taille déterminée, ou oligomodale, c'est-à-dire avec quelques tailles délimitées les unes par rapport aux autres,
b) l'élément à couche mince est détaché du substrat,
c) l'élément à couche mince détaché est broyé à une taille de particules donnée, et
d) les particules sont introduites dans un liant en tant que particules de couleur optiquement variables.

57. Procédé selon la revendication 55 ou 56, **caractérisé en ce que** les couches d'espacement sont appliquées par impression en héliogravure, impression flexographique, ou impression offset.

58. Procédé selon au moins l'une des revendications 55 à 57, **caractérisé en ce que**, pour l'application des couches d'espacement, sont utilisées des encres d'impression contenant une espèce principale de particules de dispersion monodisperses, à forme sensiblement sphérique.

59. Procédé selon au moins l'une des revendications 55 à 58, **caractérisé en ce que** la proportion de solides de l'encre et la quantité de transfert lors du processus d'impression sont réglées de manière que, sur la couche de réflexion, se forment majoritairement une monocouche ou une sub-monocouche avec les particules de dispersion.

60. Procédé selon au moins l'une des revendications 55 à 59, **caractérisé en ce que** l'encre d'impression, après application, est soumise à une étape de température, lors de laquelle au moins un composant de l'encre d'impression entre en fusion.

61. Procédé selon la revendication 60, **caractérisé en ce que** l'encre d'impression contient des particules de dispersion, qui entrent en fusion lors de l'étape de température.

62. Procédé selon la revendication 60, **caractérisé en ce que** l'encre d'impression présente des particules de dispersion à structure de type noyau-coquille avec un noyau à haut point de fusion et une coquille légèrement filmogène, les coquilles des particules de dispersion entrant en fusion et produisant un film lors de l'étape de température.

63. Procédé selon la revendication 60, **caractérisé en ce que** l'encre d'impression, outre une espèce principale de particules de dispersion dont le diamètre détermine l'épaisseur de la couche d'espacement, contient des particules à dispersion à plus petite taille, qui entrent en fusion et forment un film lors de l'étape de température.
